# EUROPEAN PATENT APPLICATION

(11) **EP 4 183 530 A1**
(43) Date of publication of application: **24.05.2023**
(21) Application number: 21842644.3
(22) Date of filing: 13.07.2021
(51) Int. Cl.: B25J 9/06

(54) **LINK FOR SOFT JOINT AND SOFT JOINT COMPRISING THE LINK**

(30) Priority: 14.07.2020 ES 202030726
(71) Applicant: Universidad Carlos III de Madrid, 28919 Leganés - Madrid (ES)
(72) Inventor: MONJE MICHARET, Concepción Alicia, 28919 Leganés (ES); RELAÑO GIBERT, Carlos, 28919 Leganés (ES); NAGUA CUENCA, Luis Fernando, 28919 Leganés (EC); MARTÍNEZ DE LA CASA DÍAZ, Santiago, 28919 Leganés (ES); BALAGUER BERNALDO DE QUIRÓS, Carlos, 28919 Leganés (ES)
(74) Representative: Herrero & Asociados, S.L.
(86) International application number: PCT/ES2021/070511
(87) International publication number: WO 2022/013469

(57) **Abstract**

The invention describes a link (1) for a soft joint comprising a proximal (2p) transverse plate and a distal (2d) transverse plate connected to each other by an elastic longitudinal element (3) arranged along a soft longitudinal axis (E_{LB}) of the link (1). The proximal (2p) and distal (2d) transverse plates also comprise longitudinal holes (4) located around the elastic longitudinal element (3), said peripheral longitudinal holes (4) being configured for the passage of respective traction tendons (5) intended to cause the bending of a joint including the soft link (1). In addition, the proximal (2p) and distal (2d) transverse plates lack radial symmetry relative to the longitudinal soft axis (E_{LB}). The invention also describes a joint (10) formed by several links (1).

## Description

### OBJECT OF THE INVENTION

A first object of the present invention is a link for soft joint whose configuration is especially advantageous for the support and handling of high loads.

A second object of the present invention is a soft joint formed by one or more of said links.

### BACKGROUND OF THE INVENTION

There are currently numerous joint morphologies for hinged systems. The vast majority of them comprise rigid links interconnected by means of flat or spherical joints, also having actuation means that act on the links in a coordinated manner. The actuation means are normally electric or pneumatic. Rigid joints have the advantage of being able to support large loads in relation to their own weight. In addition, these types of joints are less affected by the effects of the force of gravity.

However, rigid joints lack the flexibility and range of motion needed to accommodate various uses, such as confined space performance, as well as allow for misalignment in their axes when required by the application. In addition, their inability to absorb vibrations when impacts occur makes them unsuitable for safely interacting with humans and the environment, as well as compromising their integrity. An additional drawback can be its high weight, depending on the material and manufacturing properties.

To solve this problem, in recent years the so-called "soft joints" have emerged. This type of joint refers to joint devices whose main structure is made of soft or flexible materials. Soft joints are advantageous in relation to the previously described rigid joints because they are more suitable for use in confined spaces and less dangerous for their interaction with humans and the environment, even preserving their integrity in their operation.

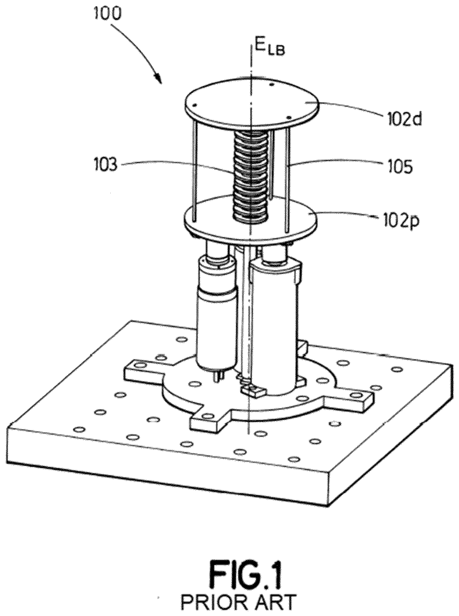

Within this context, the inventors of the present application devised a soft joint formed by a link provided with two essentially flat plates joined by means of a linear spring arranged along a soft longitudinal axis. Traction tendons connected longitudinally between angularly equispaced points of the plates and located next to the periphery of each link make it possible to cause the bending of this joint in one direction or another. This joint, shown in Fig. 1 of the present application, is described in the document by L. Nagua, J. Muñoz, CA Monje, and C. Balaguer entitled "A first approach to a proposal of a soft robotik link acting as a neck", Actas de las XXXIX Jornadas de Automática, pp. 522-529.

A major drawback of this joint is its inability to support high loads, since the effect of gravity on excessive loads generates instability that prevents adequate control of the joint. In effect, this joint does not have enough rigidity to support loads higher than a certain value, so that these cause the bending of the joint until it remains "hanging" from it without it being possible to regain control of the load. For this reason, this joint can only support this type of load when it works essentially in a vertical position.

### DESCRIPTION OF THE INVENTION

The present invention solves the above problems thanks to a soft joint made up of links designed in such a way that a mechanical lock is established limiting the maximum bending angle of the joint as a function of the selected bending direction. In addition, this mechanical lock not only ensures that the bending angle does not exceed a certain value regardless of the load handled by the joint, but also that the specific value of the maximum bending angle is different depending on the direction in which the bending occurs. This allows for much greater versatility than the currently known joints.

Some terms used in this description are briefly defined below:
In this document, the terms *"proximal"* and *"distal"* have a similar meaning to that used within the field of medicine. Specifically, the term *"proximal"* refers to any element or part of an element located on the side closest to the base of a link or joint, while the term *"distaf"* refers to any element or part of an element located on the side farthest from said base, that is, on the side closest to the free end or effector end of the joint or link.

In this document, the term "*longitudinal*" refers to a direction that coincides with the axis of the elastic element connecting the proximal and distal plates of a link to each other. Similarly, in a joint, the longitudinal direction is constituted by the axes of the elastic elements of the different links making it up, and which are aligned with each other to form the joint.

In this document, the term *"transverse"* refers to any direction contained in a plane perpendicular to the longitudinal direction.

In this document, the term *"soft longitudinal axis"* refers to the axis of a link or joint extending along the longitudinal direction of said link. When the link or joint is at rest, the soft longitudinal axis is normally rectilinear while when the link or joint is bent, the soft longitudinal axis is curved.

In this document, the term *"bending"* refers to the actuation of a link or joint so that its soft longitudinal axis is curved.

As used herein, the term *"bending angle"* of a link or joint refers to the angle between the proximal cross plate of the most proximal link and the distal cross plate of the most distal link.

In this document, the term *"locking angle"* refers to a bending angle such that adjacent transverse plates collide with each other, effectively preventing any increase in the achieved bending angle.

In this document, the term *"bending direction"* refers to the direction in which the soft longitudinal axis of a link or joint is curved when bending occurs.

A first aspect of the present invention is directed to a soft joint link comprising a proximal cross plate and a distal cross plate connected to each other by an elastic longitudinal member disposed along a soft longitudinal axis of the link. The proximal and distal transverse plates also comprise longitudinal holes located around the elastic longitudinal element, and which are configured for the passage of respective traction tendons intended to cause the bending of a joint including the soft link. Thus, depending on the traction exerted by each of the tendons, the link bends in one direction or another.

So far, the characteristics of the link of the present invention are similar to those of the prior art device developed by the inventors of the present application and shown in Fig. 1 herein. However, the link of the present invention differs from that in that the proximal and distal transverse plates lack radial symmetry relative to the soft longitudinal axis.

Indeed, in Fig. 1 it can be seen that the soft longitudinal axis (E_{LB}) of the link (100) of the prior art passes through the center of the spring (103) connecting the two circular transverse plates and through the center of said two circular transverse plates (102d, 102p). Therefore, the longitudinal soft axis (E_{LB}) constitutes a radial symmetry axis for each of said plates (102d, 102p). When the link (100) shown in Fig. 1 bends in a certain direction due to the actuation of the traction tendons (105), a mechanical lock occurs when the upper or distal transverse plate (102d) collides with the inferior or proximal transverse plate (102p). Since the soft longitudinal axis (E_{LB}) passes through the center of the circumference that makes up both plates (102d, 1020), the distance between the longitudinal soft axis (E_{LB}) and the edges of both proximal and distal transverse plates (102d, 102p) is constant. Because of this, the bending angle at which this mechanical locking occurs is exactly the same regardless of the bending direction.

On the contrary, in the present invention the elastic longitudinal element that joins the two respectively proximal or distal transverse plates is located in a position in which the soft longitudinal axis does not constitute an axis of radial symmetry of said transverse plates. This restriction implies either that the shape of the transverse plates is not circular, in which case they lack by definition a radial symmetry axis, or that, in the event that the transverse plates are circular, the soft longitudinal axis does not pass through their center. As a consequence, since in both cases the distance between the soft longitudinal axis and the edge of the respective transverse plate is not equal in all directions, when the link bends, the mechanical locking occurs at different angles depending on the direction of the bending. This set up is particularly advantageous since it allows selecting the bending angle at which the mechanical lock occurs according to each particular use needs.

In preferred embodiments of the invention, the proximal and distal transverse plates may have a shape such that the distance between their edges and said soft longitudinal axis varies continuously between a minimum value and a maximum value, for example circular, elliptical, oval shape or, in general, any shape composed of smooth edges without sharp edges. In this case, the locking angle of the link varies progressively as the bending direction changes.

Alternatively, in other preferred embodiments of the invention, the proximal and distal cross plates may have an essentially polygonal shape, either regular or irregular polygonal. By way of example of regular polygons, triangular, square, pentagonal, hexagonal, heptagonal, octagonal, enneagonal or decagonal shapes can be mentioned. Normally, the elastic longitudinal element is arranged in this case in the center of the transverse plates, so that the soft longitudinal axis also passes through the centers of the plates. In this case, two possible locking angles appear that are repeated in an angularly equispaced manner in a plurality of bending directions directed respectively towards the edges and towards the sides of the regular polygon in question. However, note that it would be possible to design irregular polygonal form transverse plates having more than two possible locking angles, or else where the locking angles would not be angularly equispaced.

The elastic longitudinal element is normally radially symmetrical relative to the soft longitudinal axis. For example, the elastic longitudinal element may have the shape of a body of revolution, such as a cylindrical shape. Thus, the bending rigidity of the link will be essentially the same regardless of the direction in which the bending occurs. Furthermore, the elastic longitudinal element can optionally be attached to the respective transverse plates by means of a smooth surface whose shape is essentially tangent to the surface of said transverse plates.

Alternatively, according to another preferred embodiment of the present invention, the elastic longitudinal element lacks radial symmetry in relation to the soft longitudinal axis, that is, it is not formed by a body of revolution. As a consequence, the distance between the soft longitudinal axis, which essentially passes through the center of the elastic longitudinal element, and the side surface of said elastic longitudinal element varies depending on the direction. This configuration is advantageous because it means that the longitudinal elastic element does not offer the same resistance to bending in one direction or another, which allows selecting the rigidity of the link according to the direction of bending.

According to a particularly preferred embodiment of the invention, the longitudinal elastic element has the shape of a polygonal cross section prism, whether regular or irregular. By way of example, reference can be made to a link provided with an elastic longitudinal element of rectangular shape. In that case, assuming that the soft longitudinal axis passes through the center of the rectangle, the flexural rigidity in the direction corresponding to a long side of the rectangular elastic longitudinal member will be greater than the flexural rigidity in the direction corresponding to one short side of it.

According to another preferred embodiment, the link of the invention, or at least the elastic longitudinal element, is made of a material with magnetorheological properties whose rigidity can be modified according to an applied magnetic field. Thus, an alternative mechanism is provided to modify the rigidity of the link at will in a simple and fast manner.

Regarding the longitudinal holes of the transverse plates, in principle they can be located in different positions depending on the characteristics required for each application, provided that they allow adequate control of the behavior of the joint depending on the traction applied to each one of them. For example, in a particularly preferred embodiment of the invention the longitudinal holes may be angularly equispaced relative to the soft longitudinal axis.

According to another preferred embodiment of the invention, the longitudinal holes may be located adjacent to radially projecting portions of the proximal and distal transverse plates relative to the soft longitudinal axis. That is, in case the transverse plates have a polygonal shape with the smooth longitudinal axis passing through their center, the longitudinal holes may be located at positions adjacent to the edges of the plates.

In a preferred embodiment of the invention alternative to the above, the peripheral longitudinal holes may be located in positions adjacent to radially recessed portions of the proximal and distal transverse plates relative to said soft longitudinal axis. That is, when the transverse plates have a polygonal shape with a soft longitudinal axis passing through their center, the longitudinal holes may be located at positions adjacent to the sides of the plates.

In yet another preferred embodiment, the elastic longitudinal element and the proximal and distal transverse plates constitute a single piece made of elastic material. This link can thus be manufactured in a simple manner by additive manufacturing or plastic injection techniques.

In general, it can be said that the rigidity of the link will be high enough so that the link can support its own weight and return to its rest configuration when it is not subjected to external forces, and at the same time low enough to allow its bending by traction forces of technically feasible values in practice. In any case, the specific value of the rigidity of the elastic material making up the link or, at least, the elastic longitudinal element, will be chosen based on the desired characteristics of the link. For example, materials whose rigidity is between approximately 40A and 100A on the Shore Hardness A scale can be used for applications that require it, such as the case of a robotic arm designed to support high loads, although different rigidity values can be selected depending on the characteristics of the application. Referring now to specific materials, the link as a whole, or at least the elastic longitudinal element, can be made of rubber, silicone, thermoplastic elastomer (TPE) or thermoplastic polyurethane (TPU), among others, as well as combinations thereof.

A second aspect of the present invention is directed to a soft joint comprising:
a) At least one link as described in the previous paragraphs. The links are arranged in such a way that their elastic longitudinal elements are aligned to form a soft longitudinal axis common to all the links that make up the joint. Typically, the joint will be made up of links identical to one another and positioned so that the cross plates of all of them are aligned in the same relative position along the soft longitudinal axis of the joint. The number of links in a joint will be selected based on the desired characteristics of the joint.
b) Traction tendons connecting said links together. The traction tendons pass through the respective longitudinal holes of each link and are attached to the distal transverse plate of the most distal link of the joint. Thus, by adequately actuating the traction tendons from the base of the joint, it is possible to cause the joint to bend in one direction or another.

Thanks to this configuration, depending on the geometry of the transverse plates of the links making up the joint and the position of the soft longitudinal axis of the joint, different locking angles will be obtained according ti the direction of bending. In addition, an adequate selection of the rigidity of the material making up the links, as well as the geometry of the elastic longitudinal elements that join the proximal and distal plates of the links, will allow selecting the rigidity of the joint in one direction or another according to the needs. The result is an extremely versatile joint that can be used in multiple applications.

Traction tendons can be connected in many ways according to the desired operating characteristics of the joint. In the simplest configuration, each traction tendon passes through longitudinal holes located at the same relative position in each transverse plate, so that they are essentially parallel to each other and to the soft longitudinal axis of the joint. However, other configurations are possible, such as crossed configurations in which each tendon passes through longitudinal holes located at different relative positions in each transverse plate. In addition, the tendons may have an outer sheath.

The actuation of the traction tendons can be carried out in different ways as long as they make it possible to apply a desired and individualized traction to each one of them. In the simplest example, the traction tendons are connected to respective servomotors located next to the base of the joint, so that proper management of the operation of the servomotors will cause the application of a particular traction to each one of the traction tendons. However, other configurations are possible, such as manufacturing the traction tendons from a shape memory material whose temperature is controlled through respective current control circuits. In this case, proper management of the current control circuits connected to the traction tendons will cause a desired intensity to pass through each tendon. As a consequence, a particular amount of heat will be generated by the Joule effect for each of said tendons, which will tend to contract a certain amount depending on the temperature reached, thus allowing precise control of the traction applied by each of them.

According to yet another preferred embodiment of the invention, the base of the joint, which can be formed by the proximal transverse plate of the most proximal joint itself or be constituted by another structure or plate attached to said proximal transverse plate, is rotatable around the long soft axis. This allows a particular bending direction endowed with a desired locking angle or rigidity to be directed towards the place where it is to be used. For example, the proximal plate of the most proximal joint, or the structure to which it is attached, may be rotatably mounted about the soft longitudinal axis, and an actuation means, such as a servomotor or the like, connected to said plate or structure would allow it to be rotated at a desired angle depending on the application.

### BRIEF DESCRIPTION OF THE FIGURES

Fig. 1 shows a perspective view of a soft link according to the prior art.
Fig. 2 shows a perspective view of a soft link according to the invention with circular cross plates.
Figs. 3a and 3b show perspective views of the soft link of Fig. 2 bent in two different directions.
Figs. 4a, 4b and 4c show views of a soft link according to the invention with triangular cross plates.
Figs. 5a and 5b show the difference in the locking angle as a function of the bending direction in a joint formed by five triangular links.
Figs. 6a and 6b show the difference in the locking angle as a function of the number of links in a joint formed by triangular links.

### PREFERRED EMBODIMENT OF THE INVENTION

Various examples of links and joints according to the present invention are described below with reference to the accompanying figures.

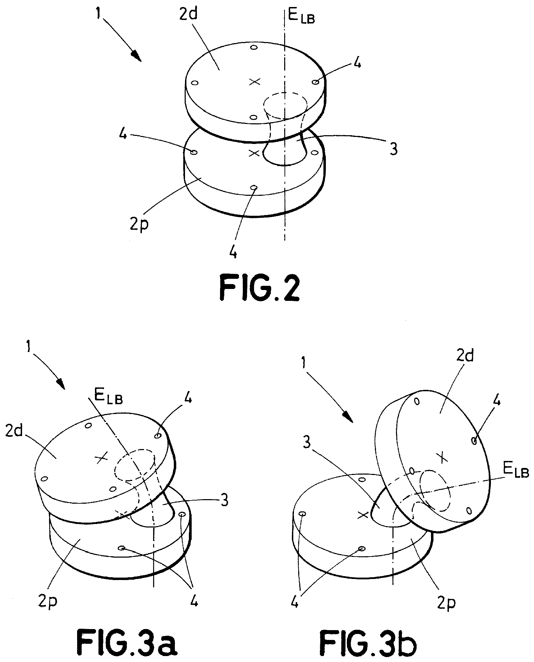

Figs. 2 shows a link (1) formed by a distal transverse plate (2d) and a proximal (2p) transverse plate joined by an elastic longitudinal element (3) through whose center the soft longitudinal axis (E_{LB}) passes. The transverse and distal plates (2d, 2p) are both circular, and the elastic longitudinal element (3) has an essentially cylindrical shape. The elastic longitudinal element (3) is located perpendicular to both plates (2d, 2p) in a position that does not coincide with the center of any of them. Therefore, the distance between the soft longitudinal axis (E_{LB}) and the edge of the plates (2d, 2p) is not constant, but varies between a maximum value corresponding to a first bending direction and a minimum value corresponding to a second bending direction opposite to the first. Each of the plates (2d, 2p) has four longitudinal holes (4) located in angularly equispaced positions. One of said holes (4) is located in a position corresponding to the first direction and another in a position corresponding to the second direction. The four holes (4) of the distal cross plate (2d) are aligned with the four holes (4) of the proximal cross plate (2p). Four respective tendons (not shown for simplicity) are arranged to pass through respective pairs of aligned longitudinal holes (4) of the proximal and distal transverse plates (2d, 2p). This link (1) can be formed by a single piece of elastic material, or else the transverse plates (2d, 2p) and the elastic longitudinal element (3) can be independent pieces joint to each other.

In Fig. 2, the link (1) is shown according to an initial or rest configuration in which the soft longitudinal axis (E_{LB}), which coincides with the axis of the cylindrical elastic longitudinal element (3), is rectilinear. Thus, in this configuration, the elastic longitudinal element (3) presents its cylindrical shape and the distal and proximal transverse plates (2d, 2p) are aligned along the soft longitudinal axis (E_{LB}). The traction tendons will be parallel to the longitudinal soft axis (E_{LB}).

Fig. 3a shows the link (1) in a bent configuration in the first direction corresponding to the maximum distance between the longitudinal soft axis (E_{LB}) and the edge of the distal and proximal transverse plates (2d, 2p). Therefore, the traction tendons are actuated in such a way that the traction exerted by the tendon located in said first direction is substantially greater than the traction exerted by the tendon located in the second direction. As a consequence, the elastic longitudinal element (3) bends elastically, and therefore the soft longitudinal axis (E_{LB}) also bends. Considering the proximal cross plate (2p) as fixed, the distal cross plate (2d) is tilted until it collides with the proximal cross plate (2p), from which moment a blockage is produced that prevents the bending angle from increasing. Thus, the blocking angle has been reached, which in this case corresponds to approximately 30°.

Fig. 3b shows the link (1) in a bent configuration in the second direction that corresponds to the minimum distance between the longitudinal soft axis (E_{LB}) and the edge of the distal and proximal transverse plates (2d, 2p). The elastic longitudinal element (3) elastically bends until the distal transverse plate (2d) collides against the proximal (2p) transverse plate when the locking angle is reached, which in this case is approximately 80°.

As it can be seen, this link (1) makes it possible to obtain different locking angles depending on the direction of bending. Only two examples corresponding to the maximum and minimum blocking angles have been shown here. However, by bending the link (1) in any intermediate direction between the first and the second direction, other different locking angles are obtained whose values range between 30° and 80°. This is particularly advantageous, as it allows the most suitable locking angle to be selected for each specific application.

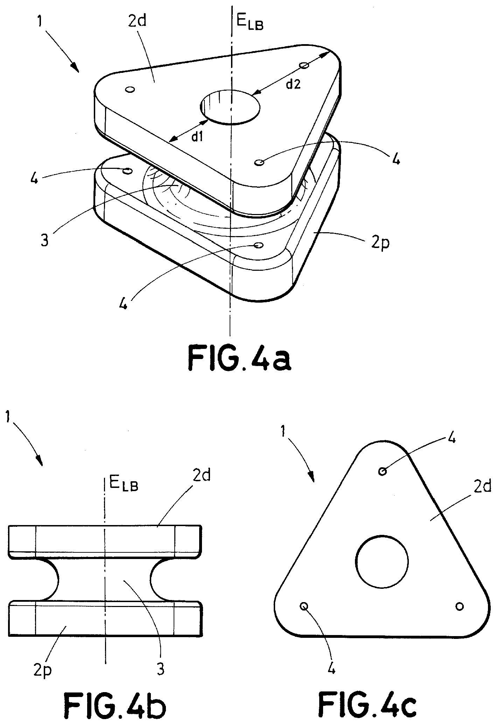

Figs. 4a-4c show different views of a link (1) in rest configuration where the proximal and distal transverse plates (2d, 2p) have an essentially equilateral triangle shape. Both transverse plates (2d, 2p) are connected by an elastic longitudinal element in the shape of a body of revolution around a soft longitudinal axis (E_{LB}) passing through the center of both transverse plates (2d, 2p). Each transverse plate (2d, 2p) comprises three longitudinal holes (4) located in positions adjacent to the three vertices. Traction tendons (not shown for simplicity) pass through pairs of aligned longitudinal holes (4) of both transverse plates (2d, 2p).

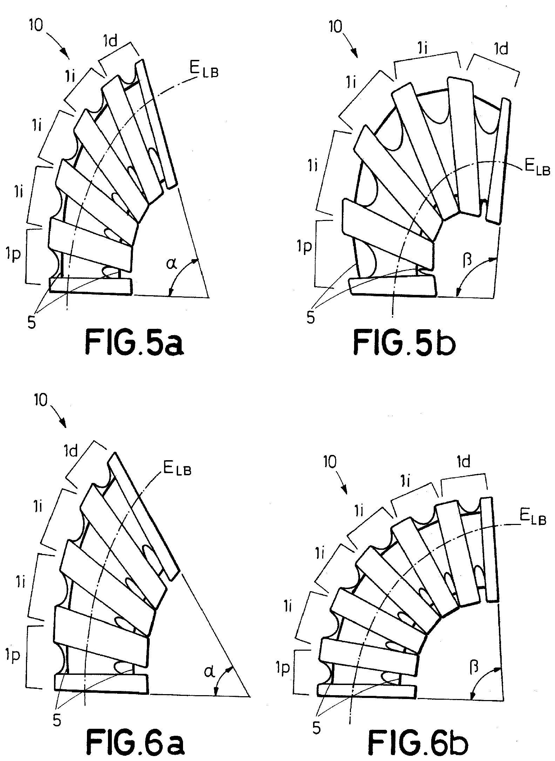

The following figures show different examples of joints (10) formed by various triangular links (1) similar to those shown in Figs. 4a-4c. Specifically, Figs. 5a and 5b show how the locking angle of a joint (10) according to the present invention varies as a function of the direction of bending, while Figs. 6a and 6b show how the locking angle of a joint (10) varies as a function of the number of links (1).

Figs. 5a and 5b show a joint (10) formed by five links (1): a proximal link (1p), a distal link (1d), and three intermediate links. Three traction tendons (5) pass through respective aligned holes (4) of the cross plates (2d, 2p) of the links (1), and are fixed to the holes (4) of the distal cross plate (2d) of the distal link (1d). Actuation means (not shown) located on the proximal side of the joint (10), for example under the proximal transverse plate (2p) of the proximal link (1p), allow traction to be applied to the traction tendons (5) in a controlled and individualized way.

In Fig. 5a, the traction tendons (5) are actuated so that the joint (10) bends in a direction corresponding to the position of a vertex of the transverse plates (2d, 2p) making up the different links (1). The distance between the soft longitudinal axis (E_{LB}) of the joint (10) and the vertex of the transverse plates (2d, 2p) constitutes the maximum distance for this type of links (1), and therefore the angle of blocking reached will be the minimum. Specifically, the locking of the joint (10) is achieved for a locking angle of approximately α=75°, which essentially corresponds to the sum of the locking angles of the different links (1) making up the joint (10).

In Fig. 5b, on the contrary, the traction tendons (5) are actuated so that the joint (10) bends in a direction corresponding to the center of one side of the transverse plates (2d, 2p) making up the links (1). The distance between the soft longitudinal axis (E_{LB}) and the center of the sides is the minimum distance possible for this type of links (1), and therefore the locking angle reached will be the maximum. As it can be seen, the blocking angle is approximately β=95°.

The Figs. 6a and 6b show two joints (10) formed by a different number of similar links (1), and bent in equivalent directions. Specifically, Fig. 6a shows a joint (10) formed by four triangular links (1) and, thanks to an adequate actuation of the traction tendons (5), bent in the direction of the vertex of the transverse plates (2d, 2p). Fig. 6b, on the other hand, shows a joint (10) formed by six triangular links (1) and also bent in the direction of the vertex of the transverse plates (2d, 2p) by actuating the traction tendons (5). As it can be seen, the locking angle of the joint (10) of Fig. 6a, of approximately α=50°, is substantially less than the locking angle of the joint (10) of Fig. 6b, of approximately α=85°.

## Claims

1. Link (1) for soft joint, comprising a proximal transverse plate (2p) and a distal transverse plate (2d) connected to each other by an elastic longitudinal element (3) arranged along a soft longitudinal axis (E_{LB}) of the link (1);
wherein the proximal (2p) and distal (2d) transverse plates comprise longitudinal holes (4) located around the elastic longitudinal element (3), said peripheral longitudinal holes (4) being configured for the passage of respective traction tendons (5) intended to cause the bending of a joint including the link (1),
**characterized in that** the proximal (2p) and distal (2d) transverse plates lack radial symmetry relative to the longitudinal soft axis (E_{LB}).

2. Link (1) according to claim 1, wherein the proximal (2p) and distal (2d) transverse plates have an essentially polygonal shape.

3. Link (1) according to claim 2, wherein the proximal (2p) and distal (2d) transverse plates have a shape selected from: triangular, square, pentagonal, hexagonal, heptagonal, octagonal, enneagonal or decagonal.

4. Link (1) according to claim 1, wherein the proximal (2p) and distal (2d) transverse plates have a shape such that the distance between their edges and said soft longitudinal axis (E_{LB}) varies continuously between a minimum value and a maximum value.

5. Link (1) according to claim 4, wherein the proximal (2p) and distal (2d) transverse plates have a shape selected from: circular, elliptical, and oval.

6. Link (1) according to any of the preceding claims, wherein the elastic longitudinal element (3) lacks radial symmetry in relation to the soft longitudinal axis (E_{LB}).

7. Link (1) according to claim 6, wherein the longitudinal elastic element (3) has the shape of a polygonal cross section prism.

8. Link (1) according to any of the preceding claims, wherein the longitudinal holes (4) are angularly equispaced relative to the soft longitudinal axis (E_{LB}).

9. Link (1) according to any of the preceding claims, wherein the longitudinal holes (4) are located in positions adjacent to radially protruding portions of the proximal (2p) and distal (2d) transverse plates in relation to the soft longitudinal axis (E_{LB}).

10. Link (1) according to any of the preceding claims, wherein the peripheral longitudinal holes (4) are located in positions adjacent to radially recessed portions of the proximal (2p) and distal (2d) transverse plates relative to said soft longitudinal axis (E_{LB}).

11. Link (1) according to any of the preceding claims, wherein the elastic longitudinal element (3) and the proximal (2p) and distal (2d) transverse plates constitute a single piece made of elastic material.

12. Link (1) according to any of the preceding claims, wherein the elastic longitudinal element (3) is made of a material that has a rigidity of between 40 and 100 Shore Hardness A.

13. Link (1) according to any of the preceding claims, which is made of a material with magnetorheological properties whose rigidity can be modified according to an applied magnetic field.

14. Soft joint (10) comprising at least one link (1) according to any of claims 1-13 and traction tendons (5) that connect said links (1) together, wherein the links (1) are arranged in such a way that its elastic longitudinal elements (3) are aligned to form a soft longitudinal axis (E_{LB}) common to all the links (1) that make up the joint (10), and wherein the traction tendons (5) pass through the respective longitudinal holes (4) of each link (1) and are fixed to the distal transverse plate (2d) of the most distal link (1) of the joint (10).

15. Soft joint (10) according to claim 14, wherein a joint base (10) formed by, or attached to, the proximal (2p) transverse plate of the most proximal joint (1) is rotatable about the soft longitudinal axis (E_{LB}).

16. Soft joint (10) according to any of the claims 14-15, wherein the traction tendons (5) are connected to respective servomotors located next to the base of the joint (10).

17. Soft joint (10) according to any of the claims 14-15, wherein the traction tendons (5) are made of a shape memory material whose temperature is controlled through respective current control circuits.
